# EUROPEAN PATENT APPLICATION

(11) **EP 4 726 205 A1**
(43) Date of publication of application: **15.04.2026**
(21) Application number: 24206227.1
(22) Date of filing: 11.10.2024
(51) Int. Cl.: F03D 7/04, F03D 17/00

(54) **METHOD FOR DETERMINING A SPATIAL POSITION OF A PORTION OF AN INFRASTRUCTURE ELEMENT, METHOD FOR MONITORING AN INFRASTRUCTURE ELEMENT, METHOD FOR TRAINING A DATA MODEL, DATA PROCESSING APPARATUS, COMPUTER PROGRAM, COMPUTER-READABLE STORAGE MEDIUM, SYSTEM FOR MONITORING AN INFRASTRUCTURE ELEMENT, AND INFRASTRUCTURE ELEMENT**

(71) Applicant: Technische Universität München, in Vertretung des Freistaats Bayern, 80333 München (DE)
(72) Inventor: RUPFLE, Johannes, 88131 Lindau (DE)
(74) Representative: Maiwald GmbH

(57) **Abstract**

The invention relates to a method for determining a spatial position of a portion of an infrastructure element (10), especially a wind energy plant (12). The method comprises obtaining first data (D1) indicative of an operational parameter of the infrastructure element (10) and/or indicative of an environmental parameter of the environment in which the infrastructure element (10) is located. The method further comprises inferring second data (D2) indicative of a position of the portion of the infrastructure element (10) based on the obtained first data (D1) and based on a trained data model (66), wherein the data model (66) is trained to provide a spatial position of the portion of an infrastructure element (10) based on the first data (D1). Moreover, the invention is directed to a method for monitoring the infrastructure element (10), to a method for training the data model (66) as well as to a data processing apparatus (30), a computer program and a computer readable storage medium for executing said methods. Furthermore, a system (28) for monitoring an infrastructure element (10) and an infrastructure element (10) are described.

## Description

### TECHNICAL FIELD

The present invention relates to a method for determining a spatial position of a portion of an infrastructure element. The infrastructure element may particularly be a wind energy plant.

Moreover, the present invention relates to a method for monitoring an infrastructure element. The infrastructure element may be a wind energy plant.

Furthermore, the present invention is directed to a method for training a data model for providing a spatial position of a portion of an infrastructure element. As before, the infrastructure element may be a wind energy plant.

Finally, the invention relates to a data processing apparatus, a computer program, a computer-readable storage medium, a system for monitoring an infrastructure element and an infrastructure element.

### BACKGROUND ART

Infrastructure elements such as for example skyscrapers, bridges, wind energy plants or power poles may be subject to wind loads due to their considerable height and/or due to their exposed location.

Wind energy plants as infrastructure elements may be subject to particularly high wind loads because they are purposefully erected in areas of high wind forces. Additionally, wind energy plants comprise a rotor comprising rotor blades that act as large attack surfaces for the wind in order to be able to produce electric energy. Moreover, as a residual of a rotational moment of the rotor, a thrust force is applied to a structure of the wind energy plant.

Wind loads acting on infrastructure elements may cause deflection or bending of the infrastructure elements. This may lead to internal material stresses and strains.

However, the capabilities of a building material or of an engineering material of sustaining said internal stresses and strains e.g. in a cyclic manner and especially over long periods of time is limited. In order to be able to make a prediction on when a building material or an engineering material of an infrastructure element may not be able to withstand said internal stresses and strains anymore, it is important to have data on the stress and strain that an infrastructure element has undergone up to a given point in its service life.

Historical weather data comprising wind speed data may provide a rough estimation of the stresses and strains that an infrastructure element has undergone. However, due to the rough nature of such an estimation based on historical weather data, considerable margins of safety need to be factored in when determining a remaining service life or a remaining time up to a general overhaul of the infrastructure element. Particularly in the case of wind energy plants, the considerable margins of safety may lead to precautionary maintenance measures significantly before reaching their actual maximum service life. The more accurate and the more detailed load data and/or load spectrum data of the infrastructure element are provided to a simulation model, the more reliable and precise a determination of the remaining service life or a remaining time up to a general overhaul of the infrastructure element will be.

Thus, there is a need for providing a more accurate estimation of the stresses and strains that an infrastructure element has undergone.

### SUMMARY

It is therefore an objective of the present invention to improve the accuracy of estimations of the stresses and strains that a building material or an engineering material of an infrastructure element has undergone. In this context, it has been found that such stresses and strains may also be described as a change in spatial position of a portion of the infrastructure element since a change in a spatial position goes together with a deflection of said portion of the infrastructure element which results in stresses and strains of the building material or the engineering material of the infrastructure element.

The problem is at least partially solved or alleviated by the subject matter of the independent claims of the present invention, wherein further examples are incorporated in the dependent claims.

According to a first aspect, there is provided a method for determining a spatial position of a portion of an infrastructure element. The infrastructure element may especially be a wind energy plant. The method comprises:
- obtaining first data indicative of an operational parameter of the infrastructure element and/or indicative of an environmental parameter of the environment in which the infrastructure element is located, and
- inferring second data indicative of a position of the portion of the infrastructure element based on the obtained first data and based on a trained data model, wherein the data model is trained to provide a spatial position of the portion of the infrastructure element based on the first data.

The spatial position of the portion of the infrastructure element may be understood as a global position of the portion of the infrastructure element in combination with an information on a height above sea level of the portion of the infrastructure element. The portion of the infrastructure element may particularly comprise a top portion, such as a tip, of the infrastructure element. In case of a wind energy plant, the portion of the infrastructure element may particularly comprise a nacelle or at least a portion of the nacelle of the wind energy plant. The nacelle of a wind energy plant is commonly understood as a component of the wind energy plant that is arranged between a tower of the wind energy plant and a rotor of the wind energy plant. Commonly, the nacelle of a wind energy plant houses an electric generator of the wind energy plant for generating electric energy from the rotational movement of the rotor.

Obtaining the first data is to be understood as receiving or determining the first data. The operational parameter is a parameter of the infrastructure element itself that can be obtained during its intended operation and/or use. By contrast, the environmental parameter does not describe the infrastructure element itself but the environment, in particular the part of earth's atmosphere, around the infrastructure element. Inferring the second data indicative of the position of the portion of the infrastructure element is to be understood as providing the second data based on the obtained first data and based on the trained data model. The data model is configured to provide the spatial position of the portion of the infrastructure element as an output when provided with the first data as an input.

The trained data model is to be understood in that it does not require manual programming or coding of physics-based laws of nature to the data model. Rather, the trained data model comprises interrelations between an input provided to the trained data model and an associated output. These interrelations are learned during training. Thus, using a trained data model has the effect of inferring accurate second data from the first data without the need for manually programming physics-based interrelations between the first data and the second data into the data model. Moreover, it is considered that the first data will be readily available in high quality during most, if not all, of the operational time of the infrastructure element. As a consequence, the spatial position of the portion of the infrastructure element can be determined during most, if not all, of the operation time of the infrastructure element. Thus, a complete history of the spatial positions of the portion of the infrastructure element may be obtained. The history of the spatial positions of the portion of the infrastructure element may be understood as a deflection history of the infrastructure element. Based thereon, stresses and strains acting on the building material or the engineering material of the portion of the infrastructure element may be derived efficiently and precisely.

In an example, the data model comprises or is a neural network. In the neural network, a series of activation functions are interlinked in a network architecture. The neural network may be trained by adjusting weights that are assigned to links between any two of the series of activation functions. During training of the neural network, said weights are adjusted by minimizing an error between the actual output provided by the neural network and an expected output of the neural network, which is often called ground truth. Due to the interlinking of a series of activation functions, even complex interrelations between the input of the neural network and the expected output of the neural network can be learned by the neural network. At the same time, after the neural network has been trained, it is to be noted that a neural network is a type of data model that may be particularly quick in providing its output data. This is because a decision function of the neural network that essentially results from the interlinking of the series of activation functions comprises comparatively simple and thus computationally inexpensive sub-functions even though the overall interrelation between input data and an expected output may be highly complex. Thus, a neural network qualifies as an efficient data model for determining a spatial position of the portion of the infrastructure element based on the first data indicative of an operational parameter of the infrastructure element and/or indicative of an environmental parameter of the infrastructure element. In particular, the neural network may be able to infer the second data in a highly accurate and efficient manner.

In an example, the neural network comprises or is a recurrent neural network. In a recurrent neural network, parts of or even the entire output data of a given layer of the neural network may additionally be propagated to a layer of the neural network that is located upstream, meaning further to the input of the neural network, of the given layer. Additionally or alternatively, parts of or even the entire output data of a given layer of the neural network may be used as an input to the given layer of the neural network. An input of a layer of the neural network may be an input of data to one or more activation functions of that respective layer of the neural network. Using a recurrent neural network as data model has the effect that the data model may be able to recognize and adapt to time dependent interrelations between the first data and the second data. For example, an infrastructure element may sway in the wind even though the wind loads on the infrastructure element do not change from one point in time to a next point in time. A basic neural network that is interlinked in a feedforward manner always provides the same output given the same input data. Applied to the given example of an infrastructure element swaying in the wind, said basic neural network would return the same spatial position of the portion of the infrastructure element as an output when provided with constant wind loads as first data. A recurrent neural network may "remember" an oscillation of the spatial position of the infrastructure element and may provide different, thus more realistic, output indicative of the position of the portion of the infrastructure element even though the wind loads on the infrastructure element as first data do not change from one point in time to a next point in time.

In an example, the recurrent neural network comprises or is a long short-term memory network. An activation function of a long short-term memory network forms part of a long short-term memory module. The long short-term memory modules of a long short-term memory network are interlinked in a network architecture. A long short-term memory module comprises an input gate for adjusting the extent of an input provided to the long short-term memory module being forwarded to the activation function of the module. Moreover, a long short-term memory module comprises a forget gate for adjusting the extent to which a value of the activation function corresponding to a previous data item of the first data influences the value of the activation function corresponding to a succeeding data item of the first data. In this context, the terms previous data item and succeeding data item are to be understood in the sense that the recurrent neural network receives and processes the previous data item of the first data before it receives and processes the succeeding data item of the first data. Furthermore, a long short-term memory module comprises an output gate for adjusting the extent of an output of the activation function of the long short-term memory module provided to another long short-term memory module interlinked and arranged downstream of the long short-term memory module. The structure of long short-term memory modules has the effect of improved remembering capabilities of the long short-term memory network compared to a general recurrent neural network. In other words, the long short-term memory network may remember a previously encountered pattern in the first data and thus may adjust its output, namely the second data indicative of the spatial position of the portion of the infrastructure element, based on the previously encountered pattern. This has the effect of an improved learning result and thus a more accurate output of the long short-term memory network, particularly when processing long time series of the first data.

In an example, the first data is indicative of at least one of:
- an acceleration of at least a portion of the infrastructure element,
- an inclination of at least a portion of the infrastructure element,
- a strain in at least a portion of the structure of the infrastructure element,
- a speed of a wind that the infrastructure element is exposed to,
- a direction of a wind that the infrastructure element is exposed to,
- an amount of snow falling and/or having fallen onto the infrastructure element,
- a temperature that the infrastructure element is exposed to,
- a dew point of air that the infrastructure element is exposed to,
- a humidity of air that the infrastructure element is exposed to,
- a freezing altitude of a portion of an atmosphere that the infrastructure element is exposed to, and
- an electric power output of an electric generator of the infrastructure element, wherein the infrastructure element comprises the wind energy plant.

The acceleration of at least a portion of the infrastructure element may relate to an acceleration of the portion of the infrastructure element in any one, any two or all of the three spatial directions. This parameter forming part of the first data has the effect that a state of swaying or deflecting of the infrastructure element may be reflected in the first data. It is to be noted that the portion of the infrastructure element whose acceleration forms part of the first data does not necessarily have to be the same portion of the infrastructure element whose spatial position is being determined. This is due to the fact that two different portions of the same infrastructure element may be mechanically linked and/or bonded to one another such that an acceleration of the one portion of the infrastructure element still allows inferring an acceleration and/or a position of the other portion of the infrastructure element.

The inclination of at least a portion of the infrastructure element is to be understood as an angle of the portion of the infrastructure element with respect to a reference direction, e.g. a horizontal direction or a vertical direction. This parameter forming part of the first data may allow inferring an extent of bending or deflection of at least part of or of the entire infrastructure element. Again, it is to be noted that the portion of the infrastructure element whose inclination forms part of the first data does not necessarily have to be the same portion of infrastructure element whose spatial position is being determined. This is due to the same phenomenon as has been explained in connection with the acceleration.

The strain in at least a portion of the infrastructure element is to be understood as a strain in a building material and/or in an engineering material of the portion of the infrastructure element. Again, this parameter forming part of the first data may allow inferring an extent of bending or deflection of at least part of or of the entire infrastructure element. Also for this type of parameter, it is to be noted that the portion of the infrastructure element whose strain forms part of the first data does not necessarily have to be the same portion of the infrastructure element whose spatial position is being determined. This is due to the same phenomenon as has been explained in connection with the acceleration.

The speed and direction of the wind that the infrastructure element is exposed to may allow inferring an extent and a direction of a wind load acting onto the infrastructure element. It is to be noted that both the speed and the direction of the wind that the infrastructure element is exposed to may relate to different portions, in particular different heights, of the infrastructure element. In other words, the speed and/or the direction of the wind that the infrastructure element is exposed to may not only comprise one measurement of the speed and/or of the direction of the wind but may comprise multiple measurements of the speed and/or of the direction of the wind that the infrastructure element is exposed to. In particular, multiple measurements of the speed and/or of the direction of the wind that the infrastructure element is exposed to may relate to different heights of the infrastructure element. Again, a measurement location on the infrastructure element of the speed and the direction of the wind that the infrastructure element is exposed to does not need to exactly correspond to the portion of the infrastructure element whose spatial position is being determined. This is due to the same phenomenon as has been explained in connection with the acceleration.

The amount of snow falling and/or having fallen onto the infrastructure element provides an indication of a snow load acting onto the infrastructure element. A weight of the infrastructure element and in particular a weight of the portion of the infrastructure element whose spatial position is being determined greatly influences a swaying and/or a deflection of the infrastructure element. Therefore, it is important to account for changes in gravitational forces acting onto the infrastructure element or onto the portion of the infrastructure element whose spatial position is being determined.

The temperature that the infrastructure element is exposed to influences a temperature of the building material and/or of the engineering material of the infrastructure element or of a portion of the infrastructure element. Different temperatures of the building material and/or of the engineering material may affect an elasticity of these materials and thus a response of these materials towards time-dependent loads, particularly wind loads, acting onto the infrastructure element or onto a portion of the infrastructure element. Hence, considering the temperature that the infrastructure element is exposed to in the first data may further improve an accuracy of the inferred second data indicative of the position of the portion of the infrastructure element.

The dew point and/or the humidity of air that the infrastructure element is exposed to and also the freezing altitude of a portion of an atmosphere that the infrastructure element is exposed to helps conveying information on the general weather situation that the infrastructure element is subject to to the trained data model. Particularly, a recurrent neural network, and even more particularly, a long short-term memory network may be able to derive a typical amount, e.g. an amplitude and/or a frequency, of swaying of the infrastructure element from the general weather situation that the infrastructure element is subject to.

In an example in which the infrastructure element comprises a wind energy plant, the first data may additionally or alternatively be indicative of a yaw angle of the nacelle of the wind energy plant. The yaw angle of the nacelle of the wind energy plant is defined as a rotational angle of the nacelle of the wind energy plant with respect to the tower of the wind energy plant around a longitudinal axis of the tower of the wind energy plant. Particularly in conjunction with the direction of the wind that the wind energy plant, or more specifically the nacelle of the wind energy plant, is exposed to, the yaw angle of the nacelle of the wind energy plant may serve as an indication of how large an attack surface of the wind energy plant for the wind is. Generally speaking, the larger the attack surface of the wind energy plant for the wind is, the more susceptible the wind energy plant is to excessive swaying and/or deflection.

Additionally or alternatively, the first data may be indicative of a blade angle of at least one blade of the rotor of the wind energy plant. The blade angle is defined as a rotation angle of a blade of the rotor of the wind energy plant with respect to a hub of the rotor of the wind energy plant around a longitudinal axis of the blade of the rotor of the wind energy plant. Similar to the yaw angle of the nacelle of the wind turbine, this parameter may also serve as an indication of how large an attack surface of the wind energy plant for the wind is.

Further additionally or alternatively, the first data may be indicative of an electric power output of the electric generator of the wind energy plant. Generally speaking, the higher the electric power output of the electric generator of the wind energy plant, the higher the wind loads that act onto the wind energy plant. However, there may be cases in which the electric power output of the electric generator of the wind energy plant has reached its maximum. In such a case, a further increase in wind speed will not be reflected by a further increase in electric power output. Also, there may be cases in which the wind energy plant is subject to excessively high wind loads and in which the electric generator of the wind energy plant does not provide any electric power output. This may particularly be the case if the wind energy plant is in a "shut down"-mode in order to prevent damage of the wind energy plant. The "shut down"-mode may be characterized by a blade angle of the blades of the rotor that provides a minimum attack surface for the wind. Typically, in the "shut down"-mode, the rotor of the wind energy plant does not spin.

Still in the example in which the infrastructure element comprises or is a wind energy plant, it is to be noted that the speed and/or the direction of a wind that the wind energy plant is exposed to, the yaw angle of the nacelle of the wind energy plant, the blade angle of at least one blade of the rotor of the wind energy plan and/or the electric power output of the electric generator of the wind energy plant may be referred to as SCADA data. It is to be understood that SCADA data may further comprise a multitude of other kinds of data. SCADA stands for "supervisory control and data acquisition". Thus, SCADA data is data obtained from a supervisory control system of the wind energy plant.

According to a second aspect, there is provided a method for monitoring an infrastructure element, especially a wind energy plant. The method comprises:
- determining a spatial position of a portion of the infrastructure element using the method of the first aspect, and
- inferring a deterioration indicator and/or an operational safety indicator based on the determined spatial position.

Since a history of the spatial positions of the portion of the infrastructure element may be understood as a deflection history of the infrastructure element, the history of the spatial positions of the portion of the infrastructure element provides an indication of the extent of load, e.g. cyclic load, on the infrastructure element. However, the ability of the building material and/or of the engineering material of the infrastructure element to withstand loads is limited. The extent of cyclic loads on the infrastructure element may comprise amplitudes and numbers of the cyclic loads. By applying phenomenological rules of damage accumulation, such as the Palmgren-Miner rule, or other suitable data models, such as regression models, to the history of said spatial positions, an extent of material deterioration may be inferred. Herein, such an extent is called the deterioration indicator of the infrastructure element. While the deterioration indicator increases as the infrastructure element is subject to more and more load events, e.g. cyclic load events, the operational safety indicator of the infrastructure element decreases at the same time. Thus, there is an inverse relation between the deterioration indicator and the operational safety indicator. However, the relation between the deterioration indicator and the operational safety indicator does not necessarily have to be inversely proportional. There may be other dependencies between the deterioration indicator and the operational safety indicator than a linear relationship, for example a quadratic or a higher order polynomial relationship. Inferring a deterioration indicator and/or an operational safety indicator based on the determined spatial positions of the portion of the infrastructure element allows providing an indication of a remaining service life and/or of a remaining time up to a required general overhaul of the infrastructure element. Moreover, an anomaly detection of the infrastructure element may be accomplished by monitoring the deterioration indicator and/or the operational safety indicator. Hence, the infrastructure element does not have to be overhauled or even dismantled after a predetermined timeframe. Instead, the infrastructure element can be overhauled or dismantled closer to an impending failure event of the infrastructure element. In other words, a margin of safety can be reduced due to a precise knowledge about the history of the spatial positions of the portion of the infrastructure element. Still in other words, a probability of detection of damage to the infrastructure element may be increased due to a precise knowledge about the history of the spatial positions of the portion of the infrastructure element.

In an example, the method further comprises triggering a maintenance activity and/or a safety measure based on the deterioration indicator and/or based on the operational safety indicator. In other words, a maintenance activity and/or a safety measure may be triggered in case the deterioration indicator and/or the operational safety indicator meet or exceed a respective threshold. The maintenance activity that is triggered may comprise a partial or a general overhaul of the infrastructure element. A safety measure that can be introduced may be the reduction of an exposure of the infrastructure element to wind. This may particularly be accomplished if the infrastructure element is able to vary its attack surface for the wind. Particularly, wind energy plants are capable of varying their attack surface for the wind, for example by modifying the yaw angle of the nacelle of the wind energy plant and/or by modifying the blade angle of at least one rotor blade of the rotor of the wind energy plant. At high wind speeds, a wind energy plant may adjust the yaw angle of the nacelle and/or the blade angle of at least one rotor blade of the rotor such that the rotor does not turn/spin. In other words, a wind energy plant may switch into the "shut down"-mode at high wind speeds. When an upper threshold of the deterioration indicator and/or a lower threshold of the operational safety indicator is met, the wind speed at which the wind energy plant adjusts the yaw angle of the nacelle and/or the blade angle of at least one rotor blade such that the rotor does not turn/spin may be reduced. Thus, a premature failure of the infrastructure element prior to an intended date of overhaul or dismantling may be avoided.

According to a third aspect, there is provided a method for training a data model for providing a spatial position of a portion of an infrastructure element, especially a wind energy plant. The method comprises:
- obtaining first data indicative of an operational parameter of the infrastructure element and/or indicative of an environmental parameter of the environment in which the infrastructure element is located,
- obtaining second data indicative of a position of at least a portion of the infrastructure element, wherein at least some data items of the first data are labelled using associated data items of the second data,
- training the data model based on the at least some labelled data items of the first data.

The spatial position of the portion of the infrastructure element may be understood as described in connection with the first aspect of the present invention.

Obtaining the first data is to be understood as receiving or determining the first data. The operational parameter and the environmental parameter are understood as described in connection with the first aspect of the present invention.

Obtaining second data is to be understood as receiving or determining the second data. In particular, the second data may comprise real time kinematic (RTK) position data of at least a portion of the infrastructure element. RTK position data is known to comprise a high level of accuracy. Thus, data items of the second data are used for labeling associated data items of the first data. In this context, associated is to be understood as data items on the same infrastructure element being captured at the same point in time or at least at substantially the same point in time. In other words, when providing the labelled data items of the first data, at least some data items of the first data are annotated using associated data items of the second data. The labelled data items may as well be designated as training data.

Training the data model is to be understood as providing the annotated data to the data model and minimizing an error between a prediction, in other words, a generated output of the data model and the ground truth second data provided to the data model. The prediction or the output of the data model is generated in response to data items of the first data as input to the data model. Training the data model has the effect that the data model may recognize patterns in the first data that allow inferring a spatial position of at least the portion of the infrastructure element when the data model is confronted with unknown data of the same type of data. The same type of data may mean that the data is still first data indicative of an operational parameter of the infrastructure element and/or indicative of an environmental parameter of the environment in which the infrastructure element is located. However, in one example, the same type of data may involve that the unknown first data may originate from the same infrastructure element as the first data used for training the data model. In this one example, the data model may be trained using data originating from an initial operational phase of the infrastructure element. After a certain period of training time, the trained data model may then infer the second data based on unknown first data that has not been presented to the data model during training. The data model being trained on data originating from the same infrastructure element as from which the data model shall infer second data indicative of a position of the portion of the infrastructure element ensures a particularly high accuracy of the inferred second data. In another example, the same type of data may involve that the unknown first data may originate from a different infrastructure element or a different but identical infrastructure as the first data used for training the data model. This means that the first data used during operation of the data model and the first data used for training the data model may originate from different entities. These entities may be of the same type or even identical. In this other example, the data model may be trained on an exemplary infrastructure element. After that, the trained data model may be applied to another infrastructure element of the same type in order to infer second data based on unknown data originating from the other infrastructure element. This has the effect that a pre-trained data model may be applied to a large number of infrastructure elements of the same type. Thus, overall training effort is minimized. This may be particularly beneficial if the infrastructure element is a wind energy plant that is erected in a wind park of a plurality of identical or similar wind energy plants. An infrastructure element being of the same type may involve the infrastructure element having been produced by the same manufacturer, a substantially similar size of the infrastructure element and/or substantially similar operational capabilities of the infrastructure element. In case of the infrastructure element comprising a wind energy plant, a wind energy plant of the same type may particularly involve wind energy plants having a substantially similar weight of their nacelles and/or having a substantially similar height, dimensioning, material and/or constructive design of their towers.

In an example, the method further comprises:
- obtaining a quality parameter indicative of a quality of at least some items of the second data,
- ignoring one or more data items of the second data if the quality parameter of the data item of the second data does not comply with a predefined quality criterion.

A quality of at least some items of the second data that are used for training the data model may refer to an accuracy, a certainty and/or a standard deviation of data items of the second data. Data items of the second data not meeting the quality criterion may be ignored, in other words excluded from training the data model. Consequently, data items of the first data associated with ignored or excluded data items of the second data are also excluded from training the data model. This is because such data items of the first data cannot be provided with a corresponding label. In other words, such data items of the first data cannot be annotated with ground truth data. The first data and the second data may comprise a chronological sequence of a plurality of data items of the first data and of the second data, respectively. The quality parameter may refer to a length of an uninterrupted chronological sequence of the second data. Thus, only data items of the second data that originate from an uninterrupted chronological sequence surpassing a minimum length may be used for training the data model. In case the second data used for training comprises RTK position data, the quality parameter may particularly comprise a quality flag of the RTK position data, a standard deviation of the triangulation in the East, North, and/or Up spatial directions applied during generation of the RTK position data, an age of a differential of the correction data from a base station and/or an ambiguity resolution of the RTK position data. Precise definitions of the listed parameters of RTK position data are available on www.rtklib.com, which provides an open-source program package for global navigation satellite systems positioning. As a quality criterion, the quality flag of the RTK position data shall surpass a predefined quality flag threshold, the standard deviation of the triangulation shall be below a predefined standard deviation threshold in one, in two or in all three spatial directions, the age of the differential of the correction data from the base station shall be below a predefined differential age threshold and/or the ambiguity resolution of the RTK position data shall surpass a predefined ambiguity resolution threshold. Ignoring data items of the second data that do not comply with their respective quality criterion ensures that only high quality RTK position data is used for training the data model. In other words, RTK position data that is used for training the data model comprises a particularly high accuracy. Thus, a high accuracy of second data inferred by the trained data model can be expected.

In an example, the first data used in the method of the third aspect is indicative of at least one of:
- an acceleration of at least a portion of the infrastructure element,
- an inclination of at least a portion of the infrastructure element,
- a strain of at least a portion of the structure of the infrastructure element,
- a speed of a wind that the infrastructure element is exposed to,
- a direction of a wind that the infrastructure element is exposed to,
- an amount of snow falling and/or having fallen onto the infrastructure element,
- a temperature that the infrastructure element is exposed to,
- a dew point of air that the infrastructure element is exposed to,
- a humidity of air that the infrastructure element is exposed to,
- a freezing altitude of a portion of an atmosphere that the infrastructure element is exposed to, and
- an electric power output of an electric generator of the infrastructure element, wherein the infrastructure element comprises the wind energy plant.

As far as further explanations on this first data are concerned, reference is made to the explanations provided in connection with the first aspect of the present invention. These explanations apply mutatis mutandis to the present third aspect.

In an example in which the infrastructure element comprises a wind energy plant, the first data may additionally or alternatively be indicative of a yaw angle of the nacelle of the wind energy plant as has already been explained in connection with the first aspect of the present invention. Additionally or alternatively, the first data may be indicative of a blade angle of at least one blade of the rotor of the wind energy plant as has already been explained in connection with the first aspect of the present invention. Further additionally or alternatively, the first data may be indicative of an electric power output of the electric generator of the wind energy plant as has already been explained in connection with the first aspect of the present invention.

Still in the example in which the infrastructure element comprises or is a wind energy plant, it is to be noted that the speed and/or the direction of a wind that the wind energy plant is exposed to, the yaw angle of the nacelle of the wind energy plant, the blade angle of at least one blade of the rotor of the wind energy plan and/or the electric power output of the electric generator of the wind energy plant may be referred to as SCADA data. It is to be understood that SCADA data may further comprise a multitude of other kinds of data. SCADA stands for "supervisory control and data acquisition". Thus, SCADA data is data obtained from a supervisory control system of the wind energy plant.

In an example, the data model comprises or is a neural network. The further explanations provided for the neural network as explained in connection with the first aspect of the present invention also apply for the neural network as used in connection with the third aspect of the present invention.

In an example of the method according to the third aspect of the present invention, the neural network comprises or is a recurrent neural network. Optionally, the recurrent neural network comprises or is a long short-term memory network. As far as the recurrent neural network and the optional long short-term memory network are concerned, the explanations provided in connection with the first aspect of the present invention apply mutatis mutandis to the present third aspect.

According to a fourth aspect, there is provided a data processing apparatus comprising means for carrying out the method of the first aspect and/or the method of the second aspect and/or the method of the third aspect. In case the data processing apparatus comprises means for carrying out the method of the first aspect, the spatial position of a portion of the infrastructure element may be determined in a reliable manner. It is to be noted that the infrastructure element may especially comprise or may be a wind energy plant. In case the data processing apparatus comprises means for carrying out the method of the second aspect, the infrastructure element may be monitored in a reliable manner. Furthermore, in case the data processing apparatus comprises means for carrying out the method of the third aspect, the data model for providing a spatial position of a portion of the infrastructure element may be reliably trained.

In an example, the data processing apparatus may be comprised in the infrastructure element. This has the effect that a multitude of first data of the infrastructure element may be readily available to the data processing apparatus. A mobile network service may not be required to provide the first data to the data processing apparatus. Thus, the solution of this example is independent from the availability of network services. This makes the solution of this example particularly robust and ensures that the position of the portion of the infrastructure element may be inferred for most, if not all, of the operation time of the infrastructure element.

In another example, the data processing apparatus may form part of a server, e.g. a cloud server, which is external to the infrastructure element. In this example, a network service, e.g. a mobile network service, may be required to provide the first data from the infrastructure element to the data processing apparatus. The solution of this example comes with the advantage that a centralized external server may monitor a plurality of infrastructure elements. This may make efficient use of computational resources and minimize overall operational costs of computing equipment.

Further in another example, the server, e.g. the cloud server, may be comprised in the infrastructure element. This may be advantageous in case a plurality of infrastructure elements of the same type is located in proximity to one another. This may especially be the case if the infrastructure element comprises or is a wind energy plant. Wind energy plants, particularly offshore wind energy plants, are often built as a park comprising a plurality of wind energy plants. Thus, one infrastructure element of a plurality of infrastructure elements may fulfill a role of a master infrastructure element analyzing first data of its own and/or of other infrastructure elements from the plurality of infrastructure elements and inferring second data for its own and/or for the other infrastructure elements from the plurality of infrastructure elements. Due to the proximity between the infrastructure elements of the plurality of infrastructure elements, a dependence on long-distance data networks may be reduced. However, the server may still function as a centralized server monitoring a plurality of infrastructure elements. Hence, it may still be made efficient use of computational resources and overall operational costs of computing equipment may still be minimized.

According to a fifth aspect, there is provided a computer program comprising instructions which, when the computer program is executed by a computer, cause the computer to carry out the method of the first aspect and/or the method of the second aspect and/or the method of the third aspect. In case the computer program comprises instructions which, when the computer program is executed by a computer, cause the computer to carry out the method of the first aspect, the spatial position of a portion of the infrastructure element may be determined in a reliable manner. It is to be noted that the infrastructure element may especially comprise or may be a wind energy plant. In case the computer program comprises instructions which, when the computer program is executed by a computer, cause the computer to carry out the method of the second aspect, the infrastructure element may be monitored in a reliable manner. Furthermore, in case the computer program comprises instructions which, when the computer program is executed by a computer, cause the computer to carry out the method of the third aspect, the data model for providing a spatial position of a portion of the infrastructure element may be reliably trained.

According to a sixth aspect, there is provided a computer-readable storage medium comprising instructions which, when executed by a computer, cause the computer to carry out the method of the first aspect and/or the method of the second aspect and/or the method of the third aspect. In case the computer-readable storage medium comprises instructions which, when the computer program is executed by a computer, cause the computer to carry out the method of the first aspect, the spatial position of a portion of the infrastructure element may be determined in a reliable manner. It is to be noted that the infrastructure element may especially comprise or may be a wind energy plant. In case the computer-readable storage medium comprises instructions which, when the computer program is executed by a computer, cause the computer to carry out the method of the second aspect, the infrastructure element may be monitored in a reliable manner. Furthermore, in case the computer-readable storage medium comprises instructions which, when the computer program is executed by a computer, cause the computer to carry out the method of the third aspect, the data model for providing a spatial position of a portion of the infrastructure element may be reliably trained.

According to a seventh aspect, there is provided a system for monitoring an infrastructure element, especially a wind energy plant. The system comprises:
- a data processing apparatus according to the fourth aspect,
- at least one sensor for providing first data indicative of an operational parameter of the infrastructure element and/or indicative of an environmental parameter of the environment in which the infrastructure element is located.

The at least one sensor for providing the first data is communicatively connected to the data processing apparatus.

The operational parameter is a parameter of the infrastructure element itself that can be obtained during its intended operation and/or use. By contrast, the environmental parameter does not describe the infrastructure element itself but the environment, in particular the part of earth's atmosphere, around the infrastructure element. Providing the first data by the corresponding sensor allows inferring second data indicative of the position of a portion of the infrastructure element based on the first data and based on a trained data model. The data model is configured to provide the spatial position of a portion of the infrastructure element as an output when provided with the first data as an input. Since a history of the spatial positions of a portion of the infrastructure element may be understood as a deflection history of the infrastructure element, the history of the spatial positions of the portion of the infrastructure element provides an indication of the extent of load, e.g. cyclic load, acting on the infrastructure element. By applying phenomenological rules of damage accumulation, such as the Palmgren-Miner rule, or other suitable data models, such as regression models, to the history of said spatial positions, an extent of material deterioration of the infrastructure element may be inferred. Inferring a deterioration indicator and/or an operational safety indicator, which may be an inverse of the deterioration indicator, based on the determined spatial positions of the portion of the infrastructure element allows providing an indication of a remaining service life and/or a remaining time up to a required general overhaul of the infrastructure element. Thus, by using such a system, the infrastructure element, particularly its structural health, may be efficiently and reliably monitored.

In an example, the system for monitoring the infrastructure element further comprises at least one sensor for providing second data indicative of a position of at least a portion of the infrastructure element. The at least one sensor for providing the second data is communicatively connected to the data processing apparatus. In particular, the at least one sensor for providing second data may comprise or may be a receiver for receiving real time kinematic (RTK) position data of at least the portion of the infrastructure element. RTK position data is known to comprise a high level of accuracy. Additionally or alternatively, the at least one sensor for providing second data may comprise a laser Doppler vibrometer. Further additionally or alternatively, the at least one sensor for providing second data may comprise any sensor element that can serve as a source for providing absolute position data. Data items of the second data may be used as ground truth data for labeling associated data items of the first data. In this context, associated is to be understood as data items on the same infrastructure element being captured at the same point in time or at least at substantially the same point in time. In other words, when providing the training data, at least some data items of the first data are annotated using corresponding data items of the second data. Thus, the data model may be trained based on first data annotated using the second data.

According to an eighth aspect, there is provided an infrastructure element comprising a data processing apparatus according to the fourth aspect or a system for monitoring the infrastructure element according to the seventh aspect. The data processing apparatus comprises a data model that is configured to provide the spatial position of a portion of the infrastructure element as an output when provided with the first data as an input. Since a history of the spatial positions of the portion of the infrastructure element may be understood as a deflection history of the infrastructure element, the history of the spatial positions of the portion of the infrastructure element provides an indication of the extent of load, e.g. cyclic load, of the infrastructure element. By applying phenomenological rules of damage accumulation, such as the Palmgren-Miner rule, or other suitable data models, such as regression models, to the history of said spatial positions, an extent of material deterioration of the infrastructure element may be inferred. Inferring a deterioration indicator and/or an operational safety indicator, which may be an inverse of the deterioration indicator, based on the determined spatial positions of the portion of the infrastructure element allows providing an indication of a remaining service life and/or a remaining time up to a required general overhaul of the infrastructure element. Thus, the infrastructure element of the eighth aspect, particularly its structural health, may be efficiently and reliably monitored.

It should be noted that the above examples may be combined with each other irrespective of the aspect involved.

These and other aspects of the present invention will become apparent from and elucidated with reference to the examples described hereinafter.

### BRIEF DESCRIPTION OF DRAWINGS

Examples of the invention will be described in the following with reference to the following drawings.

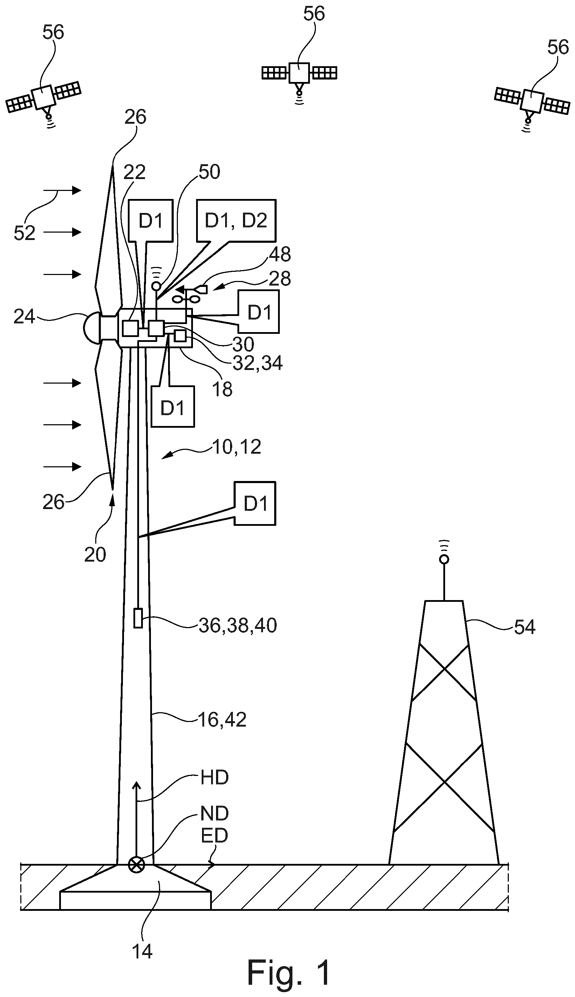

- Figure 1: shows an infrastructure element according to the present invention, wherein the infrastructure element is a wind energy plant, comprising a system according to the present invention for monitoring the infrastructure element, wherein the system comprises a data processing apparatus according to the present invention for executing a method according to the present invention for determining a spatial position of a portion of the infrastructure element, a method according to the present invention for monitoring the infrastructure element, and/or a method according to the present invention for training a data model for providing the spatial position of the portion of the infrastructure element,
- Figure 2: shows a magnified view of a nacelle of the wind energy plant of Figure 1,
- Figure 3: illustrates steps of the method according to the present invention for determining a spatial position of a portion of the infrastructure element and steps of the method according to the present invention for monitoring the infrastructure element, and
- Figure 4: illustrates steps of the method according to the present invention for training a data model for providing the spatial position of a portion of the infrastructure element.

### DETAILED DESCRIPTION

The Figures are merely schematic representations and serve only to illustrate examples of the invention. Identical or equivalent elements are in principle provided with the same reference signs.

Figure 1 shows an infrastructure element 10.

In the present example, the infrastructure element 10 is a wind energy plant 12.

The wind energy plant 12 comprises a foundation 14, a tower 16, a nacelle 18, a rotor 20 and an electric generator 22 drivingly connected to the rotor 20.

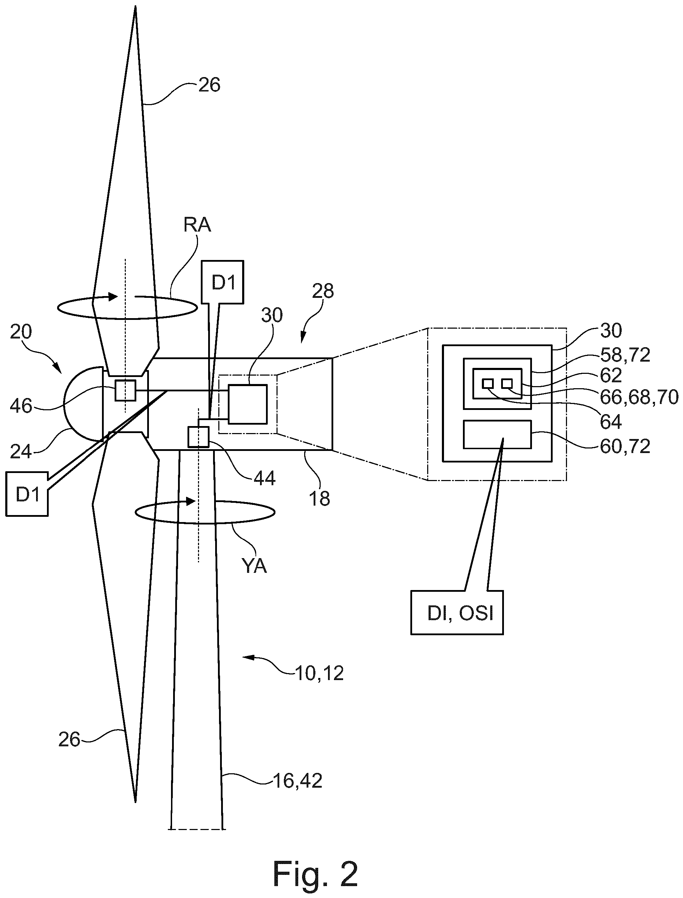

The rotor 20 of the wind energy plant 12 comprises a hub 24 and rotor blades 26, whereof only two are shown in Figures 1 and 2 for reasons of ease of representation. It is noted that within the context of the present invention, a rotor 20 of a wind energy plant 12 may comprise any number of rotor blades 26. However, as is generally known, a rotor 20 of a wind energy plant 12 often comprises three rotor blades 26.

The wind energy plant 12 further comprises a system 28 for monitoring the wind energy plant 12.

The system 30 for monitoring the wind energy plant 12 comprises a data processing apparatus 30, the electric generator 22, an accelerometer 32 and an inclination sensor 34 arranged inside the nacelle 18 of the wind energy plant 12, a strain gauge 36, a thermometer 38 and a hygrometer 40 attached to a hull 42 of the tower 16 of the wind energy plant 12, a first rotary encoder 44 arranged at an interface between the nacelle 18 and the tower 16, a second rotary encoder 46 arranged at an interface between a rotor blade 26 and the hub 24 of the rotor 20 as well as a wind meter 48 and an antenna unit 50 arranged on top of the nacelle 18.

It is noted that only one second rotary encoder 46 is shown at one of the rotor blades 26 for the ease of representation in Figure 2. It is possible that more than one or even all rotor blades 26 of the rotor 20 of the wind energy plant 12 may comprise a second rotary encoder 46 as described herein.

Moreover, it is noted that the strain gauge 36, the thermometer 38 and/or the hygrometer 40 may also be placed inside the nacelle 18 of the wind energy plant 12.

Furthermore, it is noted that the first rotary encoder 44 and the second rotary encoder 46 are only shown in Figure 2. They are not shown in Figure 1 for the ease of representation. However, the first rotary encoder 44 and the second rotary encoder 46 are comprised in the same system 28 for monitoring the wind energy plant 12 as shown in Figure 1.

Consequently, it is also noted that the electric generator 22, the accelerometer 32, the inclination sensor 34, the strain gauge 36, the thermometer 38, the hygrometer 40, the wind meter 48 and the antenna unit 50 are not explicitly shown in Figure 2 for the ease of representation. Said system components form part of the same system 28 for monitoring the wind energy plant 12 as shown in Figure 1.

The accelerometer 32 is configured to provide first data D1 indicative of an operational parameter of the wind energy plant 12. The operational parameter of the wind energy plant 12 provided by the accelerometer 32 comprises an acceleration of the nacelle 18 in a North direction ND, in an East direction ED and in a height direction HD.

The inclination sensor 34 is also configured to provide first data D1 indicative of an operational parameter of the wind energy plant 12. The operational parameter of the wind energy plant 12 provided by the inclination sensor 34 comprises an inclination of the nacelle 18 with respect to a horizontal plane. The horizontal plane is the plane spread open by the North direction ND and by the East direction ED in Figure 1.

Moreover, the strain gauge 36 attached to the hull 42 of the tower 16 is configured to provide first data D1 indicative of an operational parameter of the wind energy plant 12. The operational parameter of the wind energy plant 12 provided by the strain gauge 36 is a strain of a material of the hull 42 of the tower 16 of the wind energy plant 12. The strain of the material may be determined substantially in a circumferential direction of the tower 16 and/or substantially in a height direction HD of the tower 16. However, it has been observed that a strain of the material being determined substantially in a height direction HD of the tower provides most valuable first data D1 for a method for determining a spatial position of a portion of an infrastructure element 10, especially a wind energy plant 12.

Like the strain gauge 36, the thermometer 38 and the hygrometer 40 are attached to the hull 42 of the tower 16 of the wind energy plant 12. They are both configured to provide first data D1 indicative of current weather conditions, e.g. an air temperature and a humidity, respectively, that the wind energy plant 12 is subject to. Thus, the thermometer 38 and the hygrometer 40 provide first data D1 indicative of an environmental parameter of the wind energy plant 12.

Furthermore, the first rotary encoder 44 is configured to provide first data D1 indicative of an operational parameter of the wind energy plant 12. The operational parameter of the wind energy plant 12 provided by the first rotary encoder comprises a yaw angle YA of the nacelle 18 with respect to the tower 16 of the wind energy plant 12.

Similarly, the second rotary encoder 46 is also configured to provide first data D1 indicative of an operational parameter of the wind energy plant 12. The operational parameter of the wind energy plant 12 provided by the second rotary encoder 46 comprises a rotational angle RA of the associated rotor blade 26 with respect to the hub 24 of the rotor 20 of the wind energy plant 12.

The wind meter 48 is configured to provide first data D1 indicative of an environmental parameter of the wind energy plant 12. In the example of Figure 1, the environmental parameters provided by the wind meter 48 comprise a speed and a direction of a wind 52 that the nacelle 18 and also the rotor blades 26 of the wind energy plant 12 are exposed to.

Apart from the specific use of the first data D1 obtained from the electric generator 22, the first rotary encoder 44, the second rotary encoder 46 and the wind meter 48 within methods of the present invention, said first data D1 may also be used in a state-of-the-art SCADA system for controlling the wind energy plant 12. The abbreviation SCADA is commonly known and stands for "supervisory control and data acquisition".

The antenna unit 50 is configured to obtain first data D1 indicative of (an amount of) snow falling and/or having fallen onto the wind energy plant 12. Moreover, the antenna unit 50 is also configured to obtain first data D1 indicative of a dew point of air that the wind energy plant 12 is exposed to as well as first data D1 indicative of a freezing altitude of a portion of an atmosphere that the wind energy plant 12 is exposed to. These data are obtained via a weather forecast service through a data connection between a stationary base station 54, which provides part of a mobile service network, and the antenna unit 50.

The antenna unit 50 is also configured to provide second data D2 indicative of a position of the nacelle 18 of the wind energy plant 12. More precisely, the antenna unit 50 is configured to provide real time kinematic, RTK, position data of the nacelle 18 of the wind energy plant 12. The RTK position data comprises a global position of the nacelle 18 of the wind energy plant 12 in the North direction ND and in the East direction ED as well as a position of the nacelle 18 of the wind energy plant 12 in the height direction HD.

The RTK data is obtained by an interplay of at least three satellites 56, the stationary base station 54 and the antenna unit 50 attached to the top of the nacelle 18 of the wind energy plant 12. By means of geometric triangulation of a signal propagation delay between each of the at least three satellites 56 and the antenna unit 50 of the nacelle 18 of the wind energy plant 12, a first position of the antenna unit 50, and thus, of the nacelle 18 is determined.

A second position is obtained by means of triangulation of a signal propagation delay between each of the at least three satellites 56 and the stationary base station 54. Due to the fact that the base station 54 is stationary, its actual position is known. Thus, an error of the second position can be obtained by a comparison of the second position to the actual position of the base station 54.

The error that occurs in the determination of the second position of the base station 54 is assumed to be a systematic error that equally occurs in the determination of the first position of the nacelle 18 of the wind energy plant 12. Thus, a corrected position, in other words the RTK position data, of the antenna unit 50, and thus, of the nacelle 18 of the wind energy plant 12 is obtained by subtracting the assumed systematic error from the first position of the antenna unit 50 of the nacelle 18.

It is noted that a signal indicative of the assumed systematic error may additionally or alternatively be obtained from services like the satellite positioning service of the German land survey, commonly known as SAPOS.

The data processing apparatus 30 is communicatively connected to the accelerometer 32, to the inclination sensor 34, to the strain gauge 36, to the first rotary encoder 44 and to the second rotary encoder 46.

Moreover, the data processing apparatus 30 is communicatively connected to the electric generator 22 of the wind energy plant 12. This way, the data processing apparatus 30 is provided with data indicative of an electric power output of the electric generator 22. The electric power output of the electric generator 22 also qualifies as first data D1 indicative of an operational parameter of the wind energy plant 12.

Thus, the data processing apparatus 30 is provided with first data D1 indicative of an operational parameter of the wind energy plant 12.

Furthermore, the data processing apparatus 30 is communicatively connected to the thermometer 38, to the hygrometer 40, to the wind meter 48 and to the antenna unit 50.

Thus, the data processing apparatus 30 is additionally provided with first data D1 indicative of an environmental parameter of the environment in which the wind energy plant 12 is located.

Through the communicative connection to the antenna unit 50, the data processing apparatus 30 is also provided with second data D2 indicative of a position of the nacelle 18 of the wind energy plant 12.

The data processing apparatus 30 comprises a data storage unit 58 and a data processing unit 60.

The data storage unit 58 comprises a computer-readable storage medium 62.

On the computer-readable storage medium 62, there is provided a computer program 64 and a trainable or trained data model 66.

In the present example, the trainable data model 66 comprises a neural network 68, more specifically, a recurrent neural network 68, even more specifically, a long short-term memory network 70 configured to learn interrelations between the first data D1 and the second data D2. The learning is done by training the data model 66.

The computer program 64 and, thus, also the computer-readable storage medium 62, comprise instructions which, when executed by the data processing unit 60, or, more generally speaking, a computer, cause the computer or the data processing unit 60 to carry out the method for determining a spatial position of a portion of an infrastructure element 10 and/or a method for monitoring an infrastructure element 10 and/or a method for training a data model 66 for providing a spatial position of a portion of an infrastructure element 10. In all of the three methods, the infrastructure element 10 especially comprises or is a wind energy plant 12.

Consequently, the data storage unit 58 and the data processing unit 60 form means 72 for carrying out the method for determining a spatial position of a portion of the infrastructure element 10 and/or the method for monitoring the infrastructure element 10 and/or the method for training a data model 66 for providing a spatial position of a portion of an infrastructure element 10.

In the present example, the computer program 64 and, thus, also the computer-readable storage medium 62, comprise instructions which, when executed by the data processing unit 60, or, more generally speaking, a computer, cause the computer or the data processing unit 60 to carry out all three of the above-mentioned methods. However, the methods do not need to be carried out in a time parallel manner, as will be explained further below.

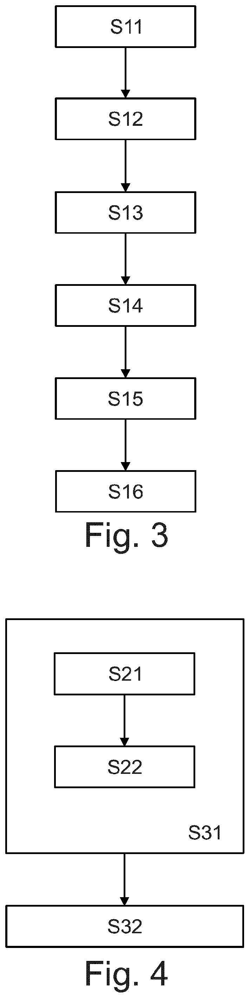

An exemplary illustration of steps of the method for training the data model 66 for providing a spatial position of a portion of an infrastructure element 10, especially a wind energy plant 12, is given in Figure 3.

In step S11 of the method for training the data model 66, first data D 1 indicative of an operational parameter of the wind energy plant 12 and/or indicative of an environmental parameter in which the wind energy plant 12 is located is obtained.

In the present example, the first data D1 is obtained by the data processing apparatus 30 from the electric generator 22, the accelerometer 32, the inclination sensor 34, the strain gauge 36, the thermometer 38, the hygrometer 40, the first rotary encoder 44, the second rotary encoder 46, the wind meter 48 and the antenna unit 50.

In step S12 of the method, second data D2 indicative of a position of the nacelle 18 of the wind energy plant 12 is obtained.

In the present example, the second data D2 is obtained by the data processing apparatus 30 from the antenna unit 50 attached to the top of the nacelle 18 of the wind energy plant 12. As mentioned before, the antenna unit 50 provides RTK position data as second data D2 to the data processing apparatus 30. RTK position data comes with the advantage over other global position data that it comprises a particularly high degree of accuracy.

In step S13 of the method for training the data model 66, a quality parameter indicative of a quality of at least some items of the second data D2 is obtained.

The quality parameter refers to a length of an uninterrupted chronological sequence of the RTK data.

Thus, only data items of the second data D2 that originate from an uninterrupted chronological sequence surpassing a minimum length, e.g. 50 data items, are used for training the data model 66. This constitutes a step S14 which relates to ignoring one or more data items of the second data D2 if the quality parameter of the respective data item of the second data D2 does not comply with the predefined quality criterion.

Due to the fact that, in the present example, the second data comprises RTK position data, particularly a quality flag of the RTK position data, a standard deviation of the triangulation in the spatial directions of the East direction ED, the North direction ND and the height direction HD applied during generation of the RTK position data, an age of a differential of the correction data from a base station 54 and an ambiguity resolution of the RTK position data are additionally used as quality parameters.

As a quality criterion, the quality flag of the RTK position data shall be equal to or surpass a predefined quality flag threshold, e.g. 1, the standard deviation of the triangulation shall be below a predefined standard deviation threshold, e.g. 0.02 meters, in one, in two or in all three spatial directions, the age of the differential of the correction data from the base station 54 shall be below a predefined differential age threshold, e.g. 5 seconds, and the ambiguity resolution of the RTK position data shall surpass a predefined ambiguity resolution threshold, e.g. 3.

Applying all these quality criteria to the second data D2 ensures that only high quality RTK position data is used for training the data model 66. In other words, RTK position data that is used for training the data model 66 comprises a particularly high degree of accuracy.

In step S15 of the method, training data for training the long short-term memory network 70 is provided by labeling at least some data items of the first data D1 using associated data items of the second data D2 that comply with their respective quality criteria.

Data items of the first data D1 being associated with data items of the second data D2 is to be understood in the sense that the respective data items were obtained from the same wind energy plant 12 at the same or at substantially the same point in time. In other words, data items of the first data D1 being associated with data items of the second data D2 relate to the same or substantially the same position of the nacelle 18 of the wind energy plant 12.

In step S16 of the method, the long short-term memory network 70 is trained based on the training data. This means that the long short-term memory network 70 is made to recognize interrelations between data items of the first data D1 and associated data items of the second data D2. In other words, the long short-term memory network 70 is provided with data items of the first data D1 each being accompanied by a label that represents an associated ground truth position data of the nacelle 18 of the wind energy plant 12, i.e. items of the second data D2.

As mentioned before, it is emphasized that isolated data tuples comprising data items of the first data D1 and of the second data D2 are not used for training the long short-term memory network 70. Instead, chronological sequences of data items of the first data D1 and of the second data D2 that comply with the established quality criteria are used for training the long short-term memory network 70. This way, the capabilities of the long short-term memory network 70 of remembering an oscillation of the spatial position of the nacelle 18 of the wind energy plant 12 and/or of remembering a previously encountered pattern in the first data D1 and in the second data D2 are fully exploited.

Once the long short-term memory network 70 is trained, it can be employed in the method for determining a spatial position of a portion of an infrastructure element 10, especially a wind energy plant 12.

The steps of the method for determining a spatial position of a portion of an infrastructure element 10, especially a wind energy plant 12, are illustrated in Figure 4.

In step S21, first data D1 indicative of an operational parameter of the wind energy plant 12 and/or indicative of an environmental parameter of the wind energy plant 12 is obtained by the data processing apparatus 30.

The first data D1 is provided as input to the trained long short-term memory network 70. Also in the context of the method for determining a spatial position of a portion of an infrastructure element 10, it is to be noted that the first data D1 is usually provided as a chronological sequence of first data D1 to the trained long short-term memory network 70.

After processing of the first data D1 by the trained long short-term memory network 70, second data D2 indicative of a position of the nacelle 18 of the wind energy plant 12 is provided by the trained long short-term memory network 70 as an output (step S22).

In other words, the trained long short-term memory network 70 is capable of inferring second data D2 from the provided first data D1 based on the interrelations between first data D 1 and ground truth second data D2 that the long short-term memory network 70 has learned during the training phase, i.e. when the method for training the data model 66 is executed.

It is emphasized that the second data D2 provided by the trained long short-term memory network 70 is indicative of a position of the nacelle 18 of the wind energy plant 12. However, the second data D2 provided by the trained long short-term memory network 70 does not comprise RTK position data of the nacelle 18 of the wind energy plant 12. RTK position data is only applied during the training phase of the long short-term memory network 70.

After the initial training phase, namely in a phase of making predictions on the position of the nacelle 18 of the wind energy plant 12, only first data D1 is provided as an input to the trained long short-term memory network 70. The output of the trained long short-term memory network 70 in the phase of making predictions on the position of the nacelle 18 of the wind energy plant 12 may be as accurate as or even more accurate than RTK position data but does technically not comprise RTK position data. This is because said output does not originate from satellite triangulation and an error correction but from a prediction function learned by the trained long short-term memory network 70 during the training phase.

The method for determining a spatial position of a portion of an infrastructure element 10, especially a wind energy plant 12, forms a step S31 of a method for monitoring an infrastructure element 10, especially a wind energy plant 12.

Steps of this method are also illustrated in Figure 4.

Based on the second data D2, in other words based on the spatial position of the nacelle 18 of the wind energy plant 12, provided as an output of the trained long short-term memory network 70, a deterioration indicator (DI) and/or an operational safety indicator (OSI) is inferred (step S32).

In case a chronological sequence of first data D1 is provided to the trained long short-term memory network 70, the output of the trained long short-term memory network 70 can be understood as a history or sequence of position data of the nacelle 18 of the wind energy plant 12.

By means of mechanical models of the wind energy plant 12 such as accurate finite element models or coarser analytical elastostatic models, the history of position data of the nacelle 18 of the wind energy plant 12 can be translated into a history of load, e.g. cyclic load, stresses and strains that a building material and/or an engineering material of the wind energy plant 12 has had to sustain during the period of aggregation of the sequence of the first data D1 provided to the trained long short-term memory network 70.

The history of loads, stresses and strains is processed in step S32 by means of a material damage accumulation model. As a result of the processing, the deterioration indicator (DI) and/or the operational safety indicator (OSI) is obtained.

The damage accumulation model may comprise the application of linear hypotheses of damage accumulation such as the Palmgren-Miner rule and/or other regression models that may also comprise non-linear hypotheses of damage accumulation in a building material and/or in an engineering material during cyclic loading.

As the wind energy plant 12 is exposed to more and more load events, e.g. cyclic load events, the building material and or the engineering material of the wind energy plant 12 deteriorates. Thus, the deterioration indicator (DI) of the wind energy plant 12 increases.

At the same time, the operational safety indicator (OSI) of the wind energy plant 12 decreases. Hence, the operational safety indicator (OSI) may be understood as an inverse of the deterioration indicator (DI).

Once the deterioration indicator (DI) has reached an upper threshold and/or the operational safety indicator (OSI) has reached a lower threshold, a partial or general overhaul of the wind energy plant 12 is triggered.

The partial or general overhaul may involve detailed inspections of the building material and/or of the engineering material of the wind energy plant 12. In particular, the tower 16 or parts of the tower 12 of the wind energy plant 12 may be inspected in a detailed manner.

Moreover, the partial or general overhaul may involve the replacement or repair of certain portions of the wind energy plant 12 that have been subject to a particularly high number of load amplitudes of a predefined load amplitude threshold.

Additionally or alternatively, the partial or general overhaul may involve a replacement or repair of certain portions of the wind energy plant that have been subject to a material deterioration such that the deterioration indicator (DI) and/or the operational safety indicator (OSI) of these portions have reached their respective thresholds.

In particular, the rotor blades 26 of the wind energy plant 12 may be repaired or replaced.

Furthermore, a certifying authority responsible for assessing a structural integrity of the wind energy plant 12 may refer to the deterioration indicator (DI) and/or to the operational safety indicator (OSI) of the wind energy plant 12. The certifying authority may rely on said indicators when providing its judgment if and how long the wind energy plant 12 can still remain in service until it needs to be dismantled for reasons of operational safety.

As used herein, the phrase "at least one", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one", "one or more", and "and/or" are open-ended expressions that are both conjunctive and disjunctive in operation. For example, each of the expressions "at least one of A, B, and C", "at least one of A, B, or C", "one or more of A, B, and C", "one or more of A, B, or C", and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: infrastructure element
- 12: wind energy plant
- 14: foundations
- 16: tower
- 18: nacelle
- 20: rotor
- 22: electric generator
- 24: hub
- 26: rotor blade
- 28: system
- 30: data processing apparatus
- 32: accelerometer
- 34: inclination sensor
- 36: strain gauge
- 38: thermometer
- 40: hygrometer
- 42: hull of tower
- 44: first rotary encoder
- 46: second rotary encoder
- 48: wind meter
- 50: antenna unit
- 52: wind
- 54: base station
- 56: satellite
- 58: data storage unit
- 60: data processing unit
- 62: computer-readable storage medium
- 64: computer program
- 66: data model
- 68: neural network
- 70: long short-term memory network
- 72: means for carrying out methods of the present invention
- DI: deterioration indicator
- D1: first data
- D2: second data
- ED: East direction
- HD: height direction
- ND: North direction
- OSI: operational safety indicator
- RA: rotational angle of rotor blade
- YA: yaw angle of nacelle

## Claims

1. A method for determining a spatial position of a portion of an infrastructure element (10), especially a wind energy plant (12), the method comprising:
- obtaining first data (D1) indicative of an operational parameter of the infrastructure element (10) and/or indicative of an environmental parameter of the environment in which the infrastructure element (10) is located, and
- inferring second data (D2) indicative of a position of the portion of the infrastructure element (10) based on the obtained first data (D1) and based on a trained data model (66), wherein the data model (66) is trained to provide a spatial position of the portion of the infrastructure element (10) based on the first data (D 1).

2. The method according to claim 1, wherein the data model (66) comprises or is a neural network (68).

3. The method according to claim 2, wherein the neural network (68) comprises or is a recurrent neural network (68), preferably a long short-term memory network (70).

4. The method according to any one of the preceding claims, wherein the first data (D1) is indicative of at least one of:
- an acceleration of at least a portion of the infrastructure element (10),
- an inclination of at least a portion of the infrastructure element (10),
- a strain in at least a portion of the structure of the infrastructure element (10),
- a speed of a wind (52) that the infrastructure element (10) is exposed to,
- a direction of a wind (52) that the infrastructure element (10) is exposed to,
- an amount of snow falling and/or having fallen onto the infrastructure element (10),
- a temperature that the infrastructure element (10) is exposed to,
- a dew point of air that the infrastructure element (10) is exposed to,
- a humidity of air that the infrastructure element (10) is exposed to,
- a freezing altitude of a portion of an atmosphere that the infrastructure element (10) is exposed to, and
- an electric power output of an electric generator of the infrastructure element, wherein the infrastructure element comprises the wind energy plant.

5. A method for monitoring an infrastructure element (10), especially a wind energy plant (12), the method comprising:
- determining a spatial position of a portion of the infrastructure element (10) using the method of any one of the preceding claims, and
- inferring a deterioration indicator (DI) and/or an operational safety indicator (OSI) based on the determined spatial position.

6. The method of claim 5, further comprising: triggering a maintenance activity and/or a safety measure based on the deterioration indicator (DI) and/or based on the operational safety indicator (OSI).

7. A method for training a data model (66) for providing a spatial position of a portion of an infrastructure element (10), especially a wind energy plant (12), the method comprising:
- obtaining first data (D1) indicative of an operational parameter of the infrastructure element (10) and/or indicative of an environmental parameter of the environment in which the infrastructure element (10) is located,
- obtaining second data (D2) indicative of a position of at least a portion of the infrastructure element (10), wherein at least some data items of the first data (D1) are labelled using associated data items of the second data (D2),
- training the data model (66) based on the at least some labelled data items of the first data (D1).

8. The method according to claim 7, wherein the method further comprises:
- obtaining a quality parameter indicative of a quality of at least some items of the second data (D2),
- ignoring one or more data items of the second data (D2) if the quality parameter of the data item of the second data (D2) does not comply with a predefined quality criterion.

9. The method according to claim 7 or 8, wherein the first data (D1) is indicative of at least one of:
- an acceleration of at least a portion of the infrastructure element (10),
- an inclination of at least a portion of the infrastructure element (10),
- a strain on at least a portion of the structure of the infrastructure element (10),
- a speed of a wind (52) that the infrastructure element (10) is exposed to,
- a direction of a wind (52) that the infrastructure element (10) is exposed to,
- an amount of snow falling and/or having fallen onto the infrastructure element (10),
- a temperature that the infrastructure element (10) is exposed to,
- a dew point of air that the infrastructure element (10) is exposed to,
- a humidity of air that the infrastructure element (10) is exposed to,
- a freezing altitude of a portion of an atmosphere that the infrastructure element (10) is exposed to, and
- an electric power output of an electric generator of the infrastructure element, wherein the infrastructure element comprises the wind energy plant.

10. The method according to any one of claims 7 to 9, wherein the data model (66) comprises or is a neural network (68).

11. A data processing apparatus (30) comprising means (72) for carrying out the method of any one of claims 1 to 4 and/or the method of claim 5 or 6 and/or the method of any one of claims 7 to 10.

12. A computer program (64) comprising instructions which, when the computer program (64) is executed by a computer, cause the computer to carry out the method of any one of claims 1 to 4 and/or the method of claim 5 or 6 and/or the method of any one of claims 7 to 10.

13. A computer-readable storage medium (62) comprising instructions which, when executed by a computer, cause the computer to carry out the method of any one of claims 1 to 4 and/or the method of claim 5 or 6 and/or the method of any one of claims 7 to 10.

14. A system (28) for monitoring an infrastructure element (10), especially a wind energy plant (12), the system comprising:
- a data processing apparatus (30) according to claim 11,
- at least one sensor for providing first data (D1) indicative of an operational parameter of the infrastructure element (10) and/or indicative of an environmental parameter of the environment in which the infrastructure element (10) is located,
wherein the at least one sensor is communicatively connected to the data processing apparatus (30).

15. An infrastructure element (10) comprising a data processing apparatus (30) according to claim 11 or a system (28) for monitoring the infrastructure element (10) according to claim 14.
